Europäisches Patentamt

European Patent Office

Office européen des brevets

(19)

(11) **EP 1 320 438 B1**

(12) **FASCICULE DE BREVET EUROPEEN**

(45) Date de publication et mention
de la délivrance du brevet:
**29.12.2004 Bulletin 2004/53**

(51) Int Cl.⁷: **B23D 57/00**, B28D 5/00,
B28D 7/00

(21) Numéro de dépôt: **01963319.7**

(22) Date de dépôt: **07.09.2001**

(86) Numéro de dépôt international:
**PCT/IB2001/001624**

(87) Numéro de publication internationale:
**WO 2002/026431 (04.04.2002 Gazette 2002/12)**

(54) **DISPOSITIF DE SCIAGE PAR FIL AVEC DES MOYENS POUR EFFECTUER UN MOUVEMENT D'OSCILLATION RELATIF ENTRE LA PIECE A SCIER ET LA FIL**

DRAHTSÄGE MIT MITTELN ZUM ERZEUGEN EINER ZWISCHEN WERKSTÜCK UND DRAHT RELATIVEN OSZILLATIONSBEWEGUNG

WIRE SAW WITH MEANS FOR PRODUCING A RELATIVE RECIPROCATING MOTION BETWEEN THE WORKPIECE TO BE SAWN AND THE WIRE

(84) Etats contractants désignés:
**AT BE CH CY DE DK ES FI FR GB GR IE IT LI LU MC NL PT SE TR**

(30) Priorité: **28.09.2000 CH 189600**

(43) Date de publication de la demande:
**25.06.2003 Bulletin 2003/26**

(73) Titulaire: **HCT Shaping Systems SA**
**1033 Cheseaux (CH)**

(72) Inventeur: **HAUSER, Charles**
**CH-1272 Grenolier (CH)**

(74) Mandataire: **Micheli & Cie**
**Rue de Genève 122,**
**Case Postale 61**
**1226 Genève-Thonex (CH)**

(56) Documents cités:
**EP-A- 0 953 416      US-A- 5 052 366**
**US-A- 5 842 462**

• **PATENT ABSTRACTS OF JAPAN vol. 1996, no. 08, 30 août 1996 (1996-08-30) -& JP 08 085053 A (SHIN ETSU CHEM CO LTD), 2 avril 1996 (1996-04-02)**

## Description

La présente invention concerne un dispositif de sciage par fil comprenant au moins une nappe de fils susceptible de se déplacer selon un mouvement alternatif ou continu, cette nappe de fils étant appuyée contre une pièce à scier fixée sur une table support, et supportée par des cylindres guide-fils, des premiers moyens étant prévus pour effectuer un mouvement d'avance relatif entre la pièce à scier et la nappe de fils suivant une direction de découpe contenue dans un plan de découpe, des seconds moyens étant prévus pour effectuer un mouvement d'oscillation relatif entre la pièce à scier et la nappe de fils autour d'un axe d'oscillation perpendiculaire au plan de découpe, les seconds moyens comprenant un dispositif d'oscillation agencé de façon à agir sur la table support et comportant au moins un axe de rotation effectif et des organes mobiles agencés de façon à produire ledit mouvement d'oscillation relatif entre la pièce à scier et la nappe de fils autour dudit axe d'oscillation dont la position spatiale peut être réglée et programmée de façon que cet axe d'oscillation se trouve à une distance programmable et réglable dudit axe de rotation effectif.

Le dispositif d'oscillation comprenant des premiers organes pour effectuer une rotation autour dudit axe de rotation perpendiculaire au plan de découpe, des seconds organes pour effectuer un déplacement suivant une direction parallèle au plan de découpe et des troisièmes organes pour effectuer un mouvement de translation suivant une direction confondue avec la direction de découpe.

Dans ce type de dispositif, le fil est enroulé en spirale autour des cylindres guide-fils et forme entre deux cylindres guide-fils au moins une nappe de fils parallèles dont la distance entre deux fils consécutifs fixe l'épaisseur des tranches. De plus le plan de la ou des nappes de fils forme, dans des dispositifs connus, un angle fixe généralement perpendiculaire à la direction de sciage, ce qui peut induire des ondulations et des stries sur la surface des tranches en cas de mouvement général latéral de la nappe de fils résultant d'oscillations thermiques par exemple. Ces ondulations, même de quelques micromètres d'amplitude, suffisent à rendre inutilisables les tranches pour certaines applications telles que du silicium pour l'industrie des semi-conducteurs. De plus lors de l'utilisation de mouvements de va-et-vient une rugosité due à l'inversion de sens apparaît. La tendance des utilisateurs de tranches est de spécifier celles-ci avec une surface brute de sciage la plus parfaite possible afin de réduire les opérations subséquentes de lappage ou de rectification et de polissage. De plus lors de l'utilisation d'abrasif libre, l'abrasif entraîné par le fil va s'user le long du chemin de sciage et donc modifier la largeur du trait de scie. Cette usure va, en conséquence, entraîner une variation de l'épaisseur des tranches. Les résultats de sciage ainsi que les tolérances obtenues seront dépendantes de la pénétration de l'abrasif entre le fil et la pièce à scier ainsi que de son usure le long du chemin de sciage. Cette usure de l'abrasif va dépendre du type d'abrasif et de la longueur sciée ou engagée c'est-à-dire de la dimension des lingots. Cette dimension étant en augmentation constante en raison des progrès de la technologie de la croissance des cristaux, le phénomène a tendance à s'accentuer. Elle dépendra également de la quantité de matière enlevée par unité de longueur et par unité de temps. Lors de la découpe de pièces de forme non rectangulaire ou carrée, la longueur sciée par la nappe de fils ou longueur engagée varie en fonction de la profondeur de sciage. La pénétration de l'abrasif, donc l'usure de l'abrasif va donc varier en fonction de la hauteur sciée induisant dans la forme de la pièce une variation d'épaisseur qui est fonction de la hauteur. Cette variation d'épaisseur peut être suffisamment importante pour que les tolérances données par l'utilisateur soient dépassées.

Des dispositifs de sciage par fil du type précité avec oscillation de la nappe de fil ou de la pièce à scier sont déjà connus, spécialement dans l'industrie des composants électroniques, des ferrites, des quartz et silices, pour l'obtention en tranches fines de matériaux tels que le silicium poly- ou monocristallin ou d'autres matériaux, tels que GaAs, InP, GGG ou également quartz, saphir synthétique, voire céramique. Le prix élevé de ces matériaux rend le sciage par fil plus attractif comparativement à d'autres techniques comme le sciage par disque diamanté.

Certains des dispositifs connus comme par exemple celui illustré à la figure 11 présentent un mouvement d'oscillation de la pièce à scier.

Ce mouvement d'oscillation est cependant toujours à axe de rotation A fixe dont la position est déterminée une fois pour toute par la construction mécanique du dispositif de sciage. Cette position ne peut donc être variée et modifiée ultérieurement. Ainsi cette position fixe de l'oscillation ne permet pas d'éviter des ondulations et des stries des tranches obtenues. En outre elle peut même produire d'autres irrégularités pendant la découpe dues à une oscillation à positionnement inadéquat.

Le document JP 08 085053A est considéré comme l'état de la technique le plus proche, conformément au préambule de la revendication 1 et 3. La scie à fils décrit dans ce document possède un dispositif d'oscillation comportant des premiers organes pour effectuer une rotation autour d'un axe de rotation perpendiculaire au plan de découpe, des seconds organes pour effectuer un déplacement suivant une direction parallèle au plan de découpe et des troisièmes organes pour effectuer un mouvement de translation suivant la direction de découpe. La combinaison de ces différents mouvements permet d'effectuer des oscillations complexes de la pièce à scier.

Le document EP 0 953 416 A2 décrit également une scie à fils équipée avec un mécanisme pour faire pivoter ou osciller la pièce à scier suivant une direction parallèle aux fils. Ce mécanisme permet la synchronisation du mouvement d'oscillation et du mouvement d'avance de la pièce à scier. Le mécanisme comprend à cet effet des bras pivotants reliés les uns aux autres pour former un quadrilatère ou polygone déformable sur lequel la pièce à scier est fixée.

La présente invention a pour but de fournir des dispositifs alternatifs pour faire osciller la pièce à découper en translation et en rotation possédant une chaîne cinématique différente et permettant de prévoir un mouvement d'oscillation précis autour d'un axe d'oscillation dont la position spatiale peut être réglée et programmée de façon aisée et fiable. L'invention est caractérisée à cet effet par les caractéristiques figurant dans les revendications indépendantes 1 et 3.

Ainsi les positions relatives de la nappe de fil et de l'axe d'oscillation peuvent être réglées et variées selon les applications. La précision des tranches et pièces sciées se trouve donc grandement améliorée. L'état de surface des tranches obtenues est très régulier étant donné qu'un mouvement d'oscillation à axe précisément positionné permet d'obtenir un effet de polissage et de lappage pendant le sciage. Toute ondulation et rugosité peuvent être évitées par la superposition au cours du sciage d'une opération de lappage et de rectification induit par des oscillations de la pièce à scier autour d'un axe dont la position peut être réglée et programmée de façon optimale. En outre cette oscillation particulière permet un meilleur contrôle de la pénétration de l'abrasif le long du chemin de sciage et un effet de débourrage du fil améliorant ainsi son efficacité de sciage.

Favorablement, le dispositif de sciage comprend une unité de commande programmable destinée à contrôler les mouvements de rotation et de translation produits par le dispositif d'oscillation de façon que la combinaison de ces mouvements générés a pour résultat un mouvement d'oscillation autour d'un axe d'oscillation dont la position est susceptible d'être programmée.

L'unité de commande peut ainsi être agencée de façon à produire un mouvement d'oscillation qui peut présenter des amplitudes et des fréquences variables au cours du temps et/ou en fonction de la profondeur du sciage.

D'autres avantages ressortent des caractéristiques exprimées dans les revendications dépendantes et de la description exposant ci-après l'invention plus en détail à l'aide de dessins qui représentent schématiquement et à titre d'exemples deux modes d'exécution et des variantes.

La figure 1 est une vue latérale schématique d'un premier mode d'exécution.

La figure 2 illustre partiellement ce premier mode d'exécution dans trois positions différentes.

La figure 3 est une vue en perspective d'une réalisation mécanique du premier mode d'exécution.

La figure 4 est une vue latérale schématique d'une variante du premier mode d'exécution.

La figure 5 illustre un deuxième mode d'exécution dans trois positions.

La figure 6 est une vue en perspective d'une réalisation mécanique de ce deuxième mode d'exécution.

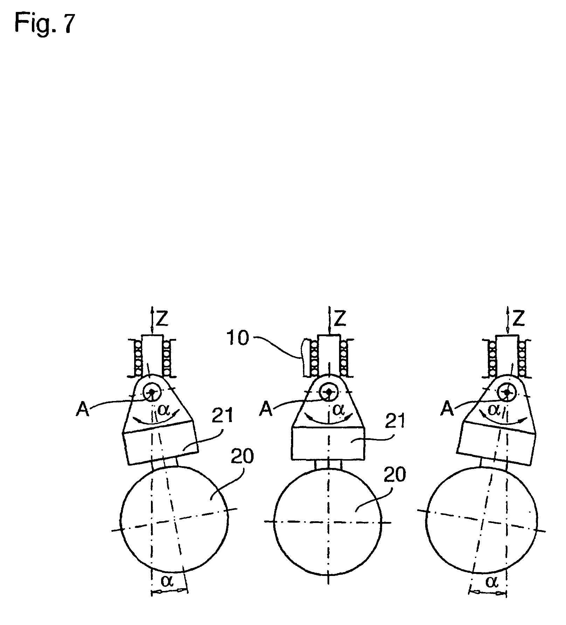

La figure 7 représente partiellement un dispositif de sciage à mouvement d'oscillation connu.

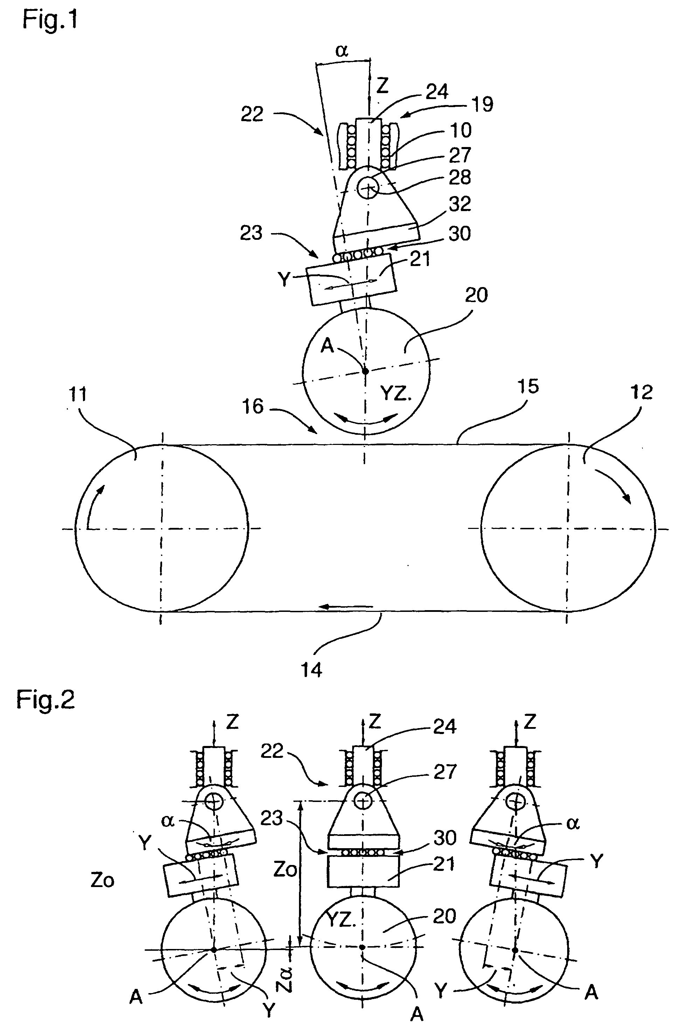

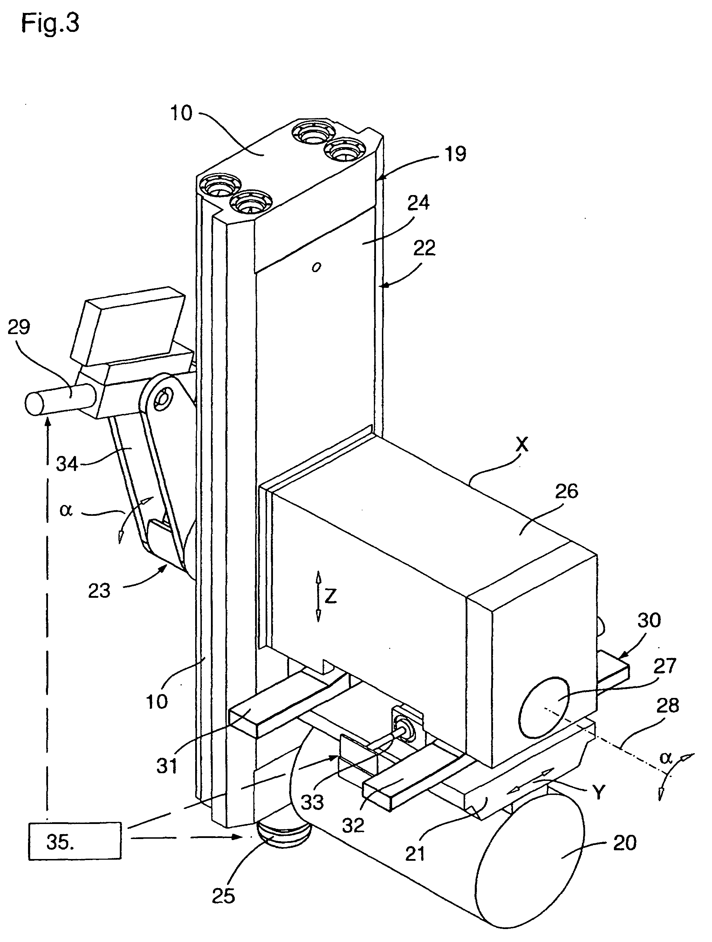

Le dispositif ou la machine de sciage par fil illustré aux figures 1 à 3 constitue un premier mode d'exécution. Ce dispositif comprend un bâti 10 supportant au moins deux cylindres guide-fils 11,12 sur lesquels un fil 14 est enroulé en spiral pour former au moins une nappe de fils 15 dont la distance entre deux fils voisins fixe l'épaisseur des tranches sciées. Les cylindres guide-fils 11,12 sont à cet effet généralement revêtus d'une couche en matière synthétique gravée avec des gorges définissant l'intervalle entre les fils voisins de la nappe. Le fil est soit recouvert d'un abrasif fixe soit alimenté de manière continue avec un abrasif libre, généralement en suspension dans un liquide. Le fil sert donc de transporteur aux particules d'abrasif qui, elles, effectuent le travail de sciage dans une zone dite de sciage 16. Ce fil est favorablement constitué d'acier à ressort d'un diamètre compris entre 0,1 et 0,2 mm afin de scier des blocs de matériaux durs ou de composition plus particulière, tels que silicium, céramique, composés des éléments des groupes III - V, GGG (Grenat à Gadolinium-Gallium), saphir, etc., en tranches de 0,1 à 5 mm d'épaisseur environ. L'agent abrasif est un produit du commerce et peut être du diamant, du carbure de silicium, de l'alumine, etc., sous forme fixée au fil ou sous forme libre en barbotine.

La pièce à scier 20 est fixée sur une table support 21 et cette dernière est montée de façon mobile sur le bâti 10 grâce à un dispositif de contrôle 22 des déplacements de la pièce à scier 20 par rapport à la nappe de fils. Ce dispositif de contrôle 22 englobe d'une part, un dispositif d'avance 19 pour effectuer un mouvement d'avance relatif entre la pièce à scier 20 et la nappe de fils 15 suivant la direction de découpe Z contenue dans le plan de découpe YZ qui est perpendiculaire aux axes des cylindres guide-fils 11,12, et d'autre part un dispositif d'oscillation 23 agencé de façon à effectuer un mouvement d'oscillation de la pièce à scier 20 tel que la position de l'axe d'oscillation A de ce mouvement d'oscillation puisse être réglée et prédéterminée.

Ce dispositif de contrôle 22 comprend à cet effet une coulisse 24 montée de façon mobile sur le bâti 10 suivant la direction de découpe Z et entraînée par un moteur 25. Cette coulisse 24 correspond également audit dispositif d'avance 19 et elle est solidaire d'un bras 26 perpendiculaire agencé suivant une direction X perpendiculaire à la direction Z et au plan de découpe YZ.

Un arbre 27 dont l'axe principal 28 est parallèle à X est monté pivotant sur la coulisse 24 et le bras 26.

Cet arbre 27 est actionné par un vérin motorisé 29 par l'intermédiaire de deux leviers 34 et peut tourner d'un angle α autour de l'axe 28 avec une fréquence et amplitude réglabte.

La table support 21 est montée sur le bras 26 par l'intermédiaire d'un mécanisme de translation 30. Ce dernier comprend deux rails 31,32 solidaires du bras 26 sur lesquels la table support 21 est montée de façon coulissante suivant une direction Y. Ce déplacement suivant la direction Y est contrôlé grâce à un actionneur 33. Le moteur 25, le vérin 29 et l'actionneur 33 sont contrôlés par une unité de commande électronique programmable 35, tel qu'un ordinateur.

Ainsi, le mouvement d'oscillation obtenu par le dispositif de contrôle 22 et le dispositif d'oscillation 23 peut être décomposé en deux déplacements de translation suivant les directions Y et Z et une rotation d'un angle α autour de l'axe 28 perpendiculaire aux directions Y et Z formant le plan de découpe YZ qui contient la direction de découpe Z et qui est parallèle aux fils de la nappe de fils 15 et perpendiculaire au plan de la nappe de fils 15.

Pour une rotation d'un angle α autour de l'axe de rotation 28 et une oscillation du même angle α autour d'un axe d'oscillation A dont la position spatiale peut-être programmée de façon que cet axe d'oscillation A se trouve à une distance prédéterminée $Z_o$ de l'axe de rotation 28, on a pour le dispositif illustré aux figures 1 à 3 les déplacements suivants:

$$Z_\alpha = \left( \frac{Z_o(1 - \cos\alpha)}{\cos\alpha} \right)$$

$$Y_\alpha = Z_o \cdot tg\alpha$$

Où $Z_o$ est égal à la distance séparant l'axe de rotation 28 et le point ou l'axe d'oscillation A;

$Z_\alpha$ correspond au déplacement de la coulisse 24 par rapport au bâti 10 suivant la direction Z à partir d'une position médiane alignée dans laquelle l'angle α est nul; et

$Y_\alpha$ correspond au déplacement de la table support 21 par rapport aux rails 31,32 et à l'arbre 27 suivant la direction Y.

Ainsi les translations $Y_\alpha$ et $Z_\alpha$ sont des fonctions de l'angle α et, lorsque ce dernier varie continuellement, des fonctions du temps. La distance $Z_o$ est un paramètre programmable et réglable du dispositif donné par la distance entre l'axe 28 de rotation mécanique et l'axe d'oscillation A effectif obtenu. Elle peut être fixe ou variable en fonction du temps. La position de l'axe d'oscillation A est programmée dans le mode d'exécution illustré aux figures 1 et 2 sur le centre de la pièce à scier 20 qui est ici cylindrique. On aura donc une distance $Z_o$ constante.

La figure 2 illustre la position des différents composants du dispositif de sciage dans trois positions différentes, dans lesquelles la position du point ou de l'axe d'oscillation A reste inchangée, en effectuant le déplacement vertical $Z_\alpha$.

Au contraire cette position de l'axe d'oscillation A pourra également être programmée de façon à être située sur la nappe de fils 15 ou à une distance prédéterminée de la nappe de fils, la distance $Z_o$ diminuera alors continuellement en fonction du temps et de l'avance de la découpe.

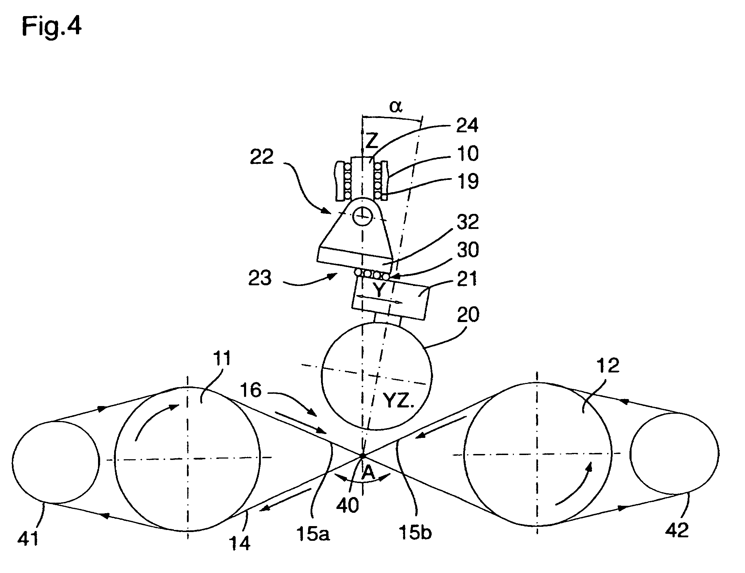

Dans la variante du premier mode d'exécution illustrée à la figure 4, l'ensemble des éléments mécaniques est identique au premier mode d'exécution, si ce n'est que le dispositif de sciage au lieu de présenter une nappe de fils parallèles comporte deux nappes de fils croisés 15a et 15b. Le fil est enroulé de façon croisée autour des cylindres guide-fils 11, 12 et forme ainsi entre ces deux cylindres guide-fils deux nappes 15a et 15b qui se croisent suivant une droite 40. Le dispositif de sciage comporte encore deux cylindres guide-fils extérieurs 41,42 nécessaires pour le parallélisme des fils des deux nappes croisées 15a et 15b. Le dispositif de contrôle 22 et le dispositif d'oscillation 23 peuvent ainsi être programmés de façon que l'axe d'oscillation A est confondu avec la droite 40 de croisement des nappes 15a et 15b. On obtient alors une découpe particulièrement précise et rapide.

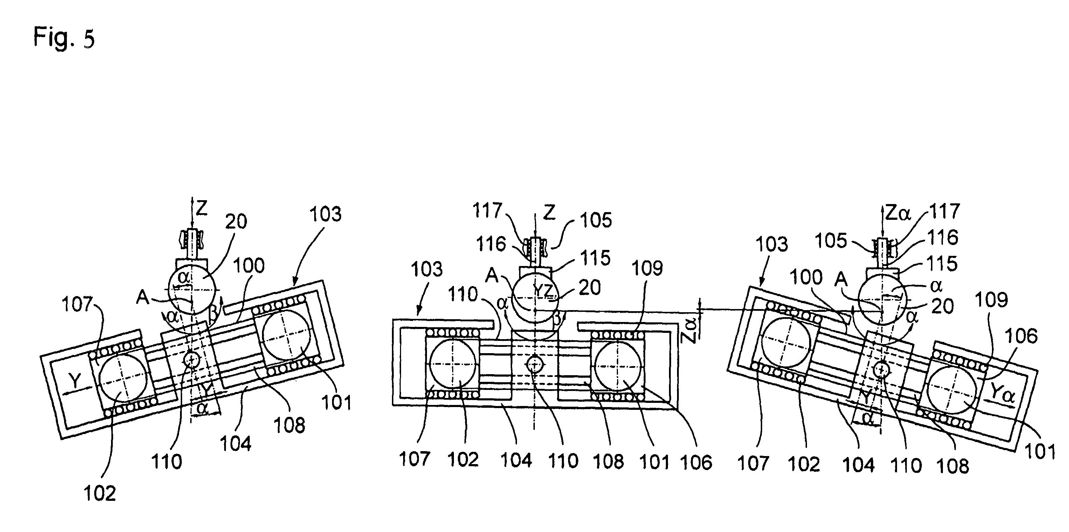

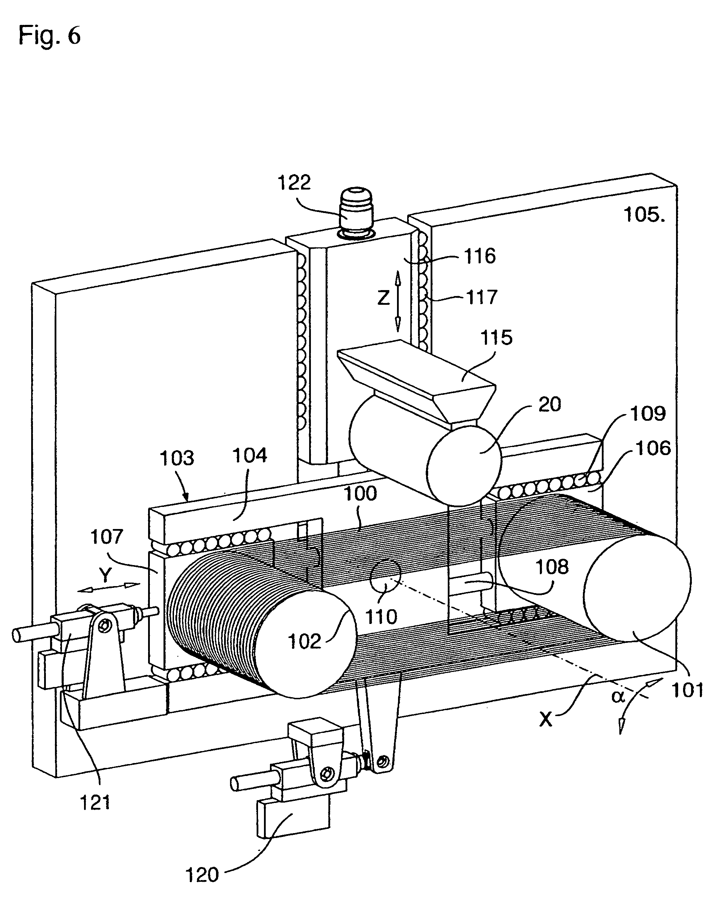

Dans le premier mode d'exécution décrit précédemment, le dispositif d'oscillation est monté sur le mécanisme d'avance de la table support de la pièce à scier. Ceci n'est pas le cas dans le deuxième mode d'exécution illustré aux figures 5 et 6 Ce dernier comprend une nappe de fils 100 supportée par des cylindres guide-fils 101,102 montés sur un dispositif d'oscillation 103. Ce dispositif 103 possède un cadre bascule 104 monté pivotant sur le bâti 105 du dispositif de sciage grâce à un pivot 110 dont l'axe de rotation est perpendiculaire au plan de découpe YZ. Les deux cylindres guide-fils 101,102 sont chacun monté tournant sur une pièce de support 106,107 et ces pièces de support rendues solidaires par des barres de liaison 108 sont agencées grâce à des paliers à roulement 109 de façon mobile suivant une direction Y sur le cadre 104 du dispositif d'oscillation.

La pièce à scier 20 est fixée sur une table support 115 solidaire d'une coulisse 116 agencée de façon mobile suivant une direction de découpe Z sur le bâti 105 au moyen de paliers à roulement 117. Le mouvement de rotation du cadre 104 autour du pivot 110 est commandé grâce à un vérin motorisé 120. La translation des cylindres guide-fils 101,102 suivant la direction Y est obtenue au moyen d'un vérin motorisé 121 et la translation de la pièce à scier 20 suivant la direction de découpe Z est produite par un moteur 122. Les vérins 120,121 et le moteur 122 sont commandés par une unité de commande qui peut être programmé de façon que la combinaison des translations selon Y et Z et la rotation autour du pivot 110 produisent un mouvement d'oscillation autour d'un axe d'oscillation A dont la position spatiale est programmable et réglable.

Dans ce mode d'exécution le dispositif d'oscillation 103 est monté sur le mécanisme supportant les cylindres guide-fils. Les translations de correction suivant la direction Z sont effectuées par la coulisse 116 supportant la pièce à scier. Ces translations pourront bien entendu également être associées au mécanisme supportant les cylindres guide-fils 101,102.

Le but de l'invention consiste donc de façon générale à permettre au dispositif de sciage de varier l'angle que fait la pièce à scier 20 par rapport à la ou aux nappes de fils 15 en cours de sciage en imprimant à la pièce à scier ou à la nappe de fils un mouvement de balancement ou d'oscillation parallèle à la nappe de fils autour d'un point A quelconque fixe ou variable choisit selon les nécessités du procédé. Pour ce faire, on produit par exemple deux déplacements suivant les directions Z et Y et une rotation α. Les trois mouvements sont indépendants et peuvent être activés indépendamment les uns des autres ou ont un mouvement lié par une fonction qui détermine le point ou l'axe d'oscillation A choisis. Ce mouvement d'oscillation permet de diminuer la longueur engagée de fil en cours de sciage ainsi que d'améliorer la pénétration de l'abrasif. Le taux de renouvellement de l'abrasif le long du chemin de sciage par le mouvement d'oscillation de la pièce à scier par rapport à la nappe de fils s'en trouve accru, d'où une augmentation de l'efficacité de sciage. Les passages successifs de la surface déjà sciée de la tranche, dus aux oscillations de la pièce auront un effet de lappage sur la surface de la tranche, donc elles diminuent les ondulations et la rugosité de la surface. Le choix de la position de l'axe d'oscillation A se fera par exemple au centre de la pièce à scier ou au point de contact de la pièce à scier et de la nappe de fil. Dans ce dernier cas il faudra la programmer comme une fonction de la position relative de la table de support 21 par rapport à la nappe de fils. Pour réaliser cette fonction, on pourra le faire par exemple de manière électronique à partir d'une commande numérique en introduisant dans celle-ci les coordonnées fonction du temps ou de la position relative de la table support. Chacun des mouvements, à savoir la ou les rotations et les translations, devra être activé indépendamment mais pourra être lié par une fonction mathématique dépendant du point ou de l'axe d'oscillation A choisi. De plus la fréquence et l'amplitude de rotation autour de l'axe choisi pourront être variables en fonction de la position relative de la table ou de l'avance de la découpe.

La précision des pièces à scier très importante pour des applications semi-conducteurs dépend de la position du fil au cours du sciage, ainsi que de l'état de surface (ondulation et rugosité). Cet état de surface, s'il n'est pas contrôlé, peut mettre en cause la totalité de la technique de sciage. Cette dernière requiert donc en plus un dispositif d'oscillation universel qui permet de minimiser ces défauts en cours de sciage, car même des variations faibles résulteront en des tranches non acceptables pour les procédés subséquents.

Les exigences des applications en électronique, par exemples liées aux dimensions grandissantes des pièces à scier, nécessitent que même les plus petites variations doivent être évitées. Il ne suffira donc plus de scier de manière continue les tranches, mais de superposer en cours de sciage une opération de lappage ou de rectification induit par les oscillations de la pièce à scier autour d'un point défini variable ou non avec en plus un meilleur contrôle de la pénétration de l'abrasif le long du chemin de sciage. La fréquence de ce mouvement ainsi que son amplitude peuvent être déterminés en cours de sciage et seront donc une fonction de la forme de la pièce à scier. Cette manière de scier a en plus l'avantage d'avoir un effet de débourrage du fil améliorant ainsi son efficacité de sciage.

Le dispositif de sciage avec le dispositif de contrôle 22 permet donc la superposition au mouvement d'avance Z, d'un mouvement d'oscillation programmé et comprend donc un ensemble permettant de faire osciller autour d'un point A quelconque, définit par l'application, avec une amplitude et une fréquence variable au cours du sciage. Cet ensemble mécanique peut être contrôlé par un système électronique, numérique ou autre. L'utilisation de ce type de dispositif permet de réaliser des pièces de précision accrue.

Il est bien entendu que les modes de réalisation décrits ci-dessus ne présentent aucun caractère limitatif et qu'ils peuvent recevoir toutes modifications désirables à l'intérieur du cadre tel que défini par la revendication 1 ou 3. En particulier, le dispositif de sciage pourra comprendre un nombre de cylindres guide-fils supérieur à deux. La commande des mouvements de translation et de rotation pourra être obtenue par tous les moyens électriques, électromagnétiques, pneumatiques, hydrauliques et tout autres actuateurs. Le mouvement d'oscillation, son amplitude et sa fréquence pourraient être asservis à des organes de mesures de l'état de la surface des tranches. Le dispositif de sciage et le dispositif d'oscillation pourront présenter toute autre construction mécanique. Ainsi, les dispositifs d'oscillations des premier et deuxième modes d'exécution pourront également être utilisés pour produire un mouvement d'oscillation de la nappe de fils, tandis que la pièce à scier reste immobile. Dans une variante complexe, la pièce à scier et la nappe de fils pourront être simultanément ou alternativement sujettes à des mouvements d'oscillations autour d'axes d'oscillations dont la position spatiale est programmable.

## Revendications

1. Dispositif de sciage par fil comprenant au moins une nappe de fils (15) susceptible de se déplacer selon un mouvement alternatif ou continu, cette nappe de fils étant appuyée contre une pièce à scier (20) fixée sur une table support (21), et supportée par des cylindres guide-fils (11, 12), des premiers moyens (24) étant prévus pour effectuer un mouvement d'avance relatif entre la pièce à scier (20) et la nappe de fils (15) suivant une direction de découpe (Z) contenue dans un plan de découpe (YZ), des seconds moyens (23) étant prévus pour effectuer un mouvement d'oscillation relatif entre la pièce à scier (20) et la nappe de fils (15) autour d'un axe d'oscillation (A) perpendiculaire au plan de découpe, les seconds moyens comprenant un dispositif d'oscillation (23) agencé de façon à agir sur la table support (21) et comportant au moins un axe de rotation (28) effectif et des organes mobiles (24, 27, 30) agencés de façon à produire ledit mouvement d'oscillation relatif entre la pièce à scier (20) et la nappe de fils (15) autour dudit axe d'oscillation (A) dont la position spatiale peut être réglée et programmée de façon que cet axe d'oscillation (A) se trouve à une distance (Z) programmable et réglable dudit axe de rotation (28) effectif, le dispositif d'oscillation (23) comprenant des premiers organes (27) pour effectuer une rotation ($\alpha$) autour dudit axe de rotation (28) perpendiculaire au plan de découpe (YZ), des seconds organes (30) pour effectuer un déplacement suivant une direction parallèle au plan de découpe (YZ) et des troisièmes organes (24) pour effectuer un mouvement de translation suivant une direction confondue avec la direction de découpe (Z), **caractérisé par le fait que** les premiers organes comportent un élément rotatif (27) monté sur les troisièmes organes (24), et que les seconds organes (30) présentent un élément coulissant (31, 32) disposé entre l'élément rotatif (27) et la table support (21) sur laquelle la pièce à scier (20) est fixée.

2. Dispositif de sciage selon la revendication 1, **caractérisé par le fait que** les déplacements des premiers, seconds et troisièmes organes (27, 30, 24) sont liés par les équations suivantes :

$$Z_\alpha = \left( \frac{Z_o(1 - \cos\alpha)}{\cos\alpha} \right)$$

$$Y_\alpha = Z_o \cdot \mathrm{tg}\,\alpha$$

où $Z_O$ est égal à la distance séparant l'axe de rotation (28) de l'élément rotatif (27) et de l'axe d'oscillation (A) obtenu; $\alpha$ est l'angle de rotation de l'élément rotatif (27); $Z\alpha$ correspond au déplacement de translation des troisièmes organes (24); et $Y\alpha$ correspond au déplacement de translation des seconds organes (30).

3. Dispositif de sciage par fil comprenant au moins une nappe de fils (100) susceptible de se déplacer selon un mouvement alternatif ou continu, cette nappe de fils étant appuyée contre une pièce à scier (20) et supportée par des cylindres guide-fils (101, 102), des premiers moyens (116) étant prévus pour effectuer un mouvement d'avance relatif entre la pièce à scier (20) et la nappe de fils (100) suivant une direction de découpe (Z) contenue dans un plan de découpe (YZ), des seconds moyens (103) étant prévus pour effectuer un mouvement d'oscillation relatif entre la pièce à scier (20) et la nappe de fils (100) autour d'un axe d'oscillation (A) perpendiculaire au plan de découpe, les seconds moyens comprenant un dispositif d'oscillation (103) agencé de façon à agir sur des organes mécaniques (104) supportant les cylindres guide-fils (101, 102) et comportant au moins un axe de rotation (110) effectif et des organes mobiles (106, 107, 110) agencés de façon à produire ledit mouvement d'oscillation relatif entre la pièce à scier (20) et la nappe de fils (100) autour dudit axe d'oscillation (A) dont la position spatiale peut être réglée et programmée de façon que cet axe d'oscillation (A) se trouve à une distance (Z) programmable et réglable dudit axe de rotation (110) effectif, **caractérisé par le fait que** le dispositif d'oscillation (103) comprend une bascule (104) montée pivotante suivant ledit axe de rotation (110) perpendiculaire au plan de découpe, les cylindres guide-fils (101, 102) étant montés sur au moins un support (106, 107) pouvant être déplacé suivant une direction (Y) parallèle au plan de découpe (YZ), des organes de translation (116, 117) étant prévus pour produire un déplacement relatif entre la pièce à scier (20) et ledit axe de rotation (110) suivant une direction confondue avec la direction de découpe (Z).

4. Dispositif de sciage selon l'une des revendications 1 à 3, **caractérisé par le fait qu'**il comprend une unité de commande programmable (35) destinée à contrôler les mouvements de rotation et de translation produits par le dispositif d'oscillation de façon que la combinaison de ces mouvements générés a pour résultat un mouvement d'oscillation autour d'un axe d'oscillation (A) dont la position est susceptible d'être programmée.

5. Dispositif de sciage selon la revendication 4, **caractérisé par le fait que** l'unité de commande (35) est agencée de façon à produire un mouvement d'oscillation qui peut présenter des amplitudes et des fréquences variables au cours du temps et/ou en fonction de la profondeur de sciage.

**Patentansprüche**

1. Drahtsägevorrichtung mit zumindest einer Schicht von Drähten (15), die sich in einer Hin- und Herbewegung oder in einer kontinuierlichen Bewegung verschieben kann, wobei diese Drahtschicht gegen ein zu sägendes Werkstück (20), das auf einem Auflagetisch (21) befestigt ist, gedrückt und durch Drahtführungszylinder (11, 12) gehalten wird, während erste Mittel (24) vorgesehen sind, um eine relative Vorschubbewegung zwischen dem zu sägenden Werkstück (20) und der Drahtschicht (15) entlang einer in einer Schnittebene (YZ) enthaltenen Schneidrichtung (Z) zu bewirken, und zweite Mittel (23) vorgesehen sind, um eine relative oszillierende Bewegung zwischen dem zu sägenden Werkstück (20) und der Drahtschicht (15) um eine zur Schnittebene senkrechte Oszillationsachse (A) zu bewirken, wobei die zweiten Mittel eine Oszillationsvorrichtung (23), die so eingerichtet ist, dass sie auf den Auflagetisch (21) wirkt und zumindest eine effektive Drehachse (28) umfasst, sowie bewegliche Organe (24, 27, 30) aufweisen, die so eingerichtet sind, dass sie die benannte relative oszillierende Bewegung zwischen dem zu sägenden Werkstück (20) und der Drahtschicht (15) um die benannte Oszillationsachse (A) erzeugen, deren Raumlage so eingestellt und programmiert werden kann, dass sich diese Oszillationsachse (A) in einem programmierbaren und einstellbaren Abstand (Z) von der benannten effektiven Drehachse (28) befindet, und wobei die Oszillationsvorrichtung (23) erste Organe (27) umfasst, um eine Drehung ($\alpha$) um die benannte, zur Schnittebene (YZ) senkrechte Drehachse (28) zu bewirken, zweite Organe (30), um eine Verschiebung entlang einer zur Schnittebene (YZ) parallelen Richtung zu bewirken, sowie dritte Organe (24), um eine Translationsbewegung entlang einer mit der Schneidrichtung (Z) zusammenfallenden Richtung zu bewirken, **dadurch gekennzeichnet, dass** die ersten Organe ein auf die dritten Organe (24) montiertes drehbares Element (27) umfassen und dass die zweiten Organe (30) ein in einer Führung gleitendes Element (31, 32) aufweisen, das zwischen dem drehbaren Element (27) und dem Auflagetisch (21), auf dem das zu sägende Werkstück befestigt ist, angeordnet ist.

2. Sägevorrichtung nach Anspruch 1, **dadurch gekennzeichnet, dass** die Verschiebungen der ersten, zweiten und dritten Organe (27, 30, 24) durch die folgenden Gleichungen miteinander verbunden sind:

$$Z_\alpha = \left( \frac{Z_0\,(1 - \cos\alpha)}{\cos\alpha} \right)$$

$$Y_\alpha = Z_0 \cdot \tan\alpha$$

wo $Z_0$ gleich dem Abstand zwischen der Drehachse (28) des drehbaren Elements (27) und der resultierenden Oszillationsachse (A) ist;
$\alpha$ ist der Drehwinkel des drehbaren Elements (27);
$Z_\alpha$ entspricht der Translationsverschiebung der dritten Organe (24); und
$Y_\alpha$ entspricht der Translationsverschiebung der zweiten Organe (30).

3. Drahtsägevorrichtung mit zumindest einer Schicht von Drähten (100), die sich in einer Hin- und Herbewegung oder in einer kontinuierlichen Bewegung verschieben kann, wobei diese Drahtschicht gegen ein zu sägendes Werkstück (20) gedrückt und durch Drahtführungszylinder (101, 102) gehalten wird, während erste Mittel (116) vorgesehen sind, um eine relative Vorschubbewegung zwischen dem zu sägenden Werkstück (20) und der Drahtschicht (100) entlang einer in einer Schnittebene (YZ) enthaltenen Schneidrichtung (Z) zu bewirken, und zweite Mittel (103) vorgesehen sind, um eine relative oszillierende Bewegung zwischen dem zu sägenden Werkstück (20) und der Drahtschicht (100) um eine zur Schnittebene senkrechte Oszillationsachse (A) zu bewirken, wobei die zweiten Mittel eine Oszillationsvorrichtung (103), die so eingerichtet ist, dass sie auf mechanische Elemente (104) wirkt, die die Drahtführungszylinder (101, 102) halten, und zumindest eine effektive Drehachse (110) umfassen, sowie bewegliche Organe (106, 107, 110) aufweisen, die so eingerichtet sind, dass sie die benannte relative oszillierende Bewegung zwischen dem zu sägenden Werkstück (20) und der Drahtschicht (100) um die benannte Oszillationsachse (A) erzeugen, deren Raumlage so eingestellt und programmiert werden kann, dass sich diese Oszillationsachse (A) in einem programmierbaren und einstellbaren Abstand (Z) von der benannten effektiven Drehachse (110) befindet, **dadurch gekennzeichnet, dass** die Oszillationsvorrichtung (103) eine Kippvorrichtung (104) umfasst, die schwenkbar zu der benannten, zur Schnittebene senkrechten Drehachse (110) montiert ist, während die Drahtführungszylinder (101, 102) auf zumindest einen Träger (106, 107) montiert sind, der entlang einer Richtung (Y) parallel zur Schnittebene (YZ) verschoben werden kann, wobei Translationsorgane (116, 117) vorgesehen sind, um eine relative Verschiebung zwischen dem zu sägenden Werkstück (20) und der benannten Drehachse (110) entlang einer mit der Schneidrichtung (Z) zusammenfallenden Richtung zu erzeugen.

4. Sägevorrichtung nach einem der Ansprüche 1 bis 3, **dadurch gekennzeichnet, dass** sie eine programmierbare Steuereinheit (35) umfasst, die dafür bestimmt ist, die durch die Oszillationsvorrichtung erzeugten Dreh- und Translationsbewegungen so zu steuern, dass die Kombination dieser erzeugten Bewegungen eine oszillierende Bewegung um eine Oszillationsachse (A) ergibt, deren Position programmiert werden kann.

5. Sägevorrichtung nach Anspruch 4, **dadurch gekennzeichnet, dass** die Steuereinheit (35) so eingerichtet ist, dass sie eine oszillierende Bewegung bewirkt, die Amplituden und Frequenzen aufweisen kann, die sich im Verlaufe der Zeit und/oder in Abhängigkeit von der Sägetiefe ändern können.

**Claims**

1. Wire sawing device comprising at least one layer of wires (15) adapted to move with alternating or continuous movement, this layer of wires being pressed against a piece to be sawed (20) fixed on a support table (21), and supported by wire guide cylinders (11, 12), first means (24) being provided to carry out a relative advancing movement between the piece to be sawed (20) and the layer of wires (15) in a cutting direction (Z) contained in a cutting plane (YZ), second means (23) being provided to carry out a relative oscillatory movement between the piece to be sawed (20) and the layer of wires (15) about an axis of oscillation (A) perpendicular to the cutting plane, the second means comprising an oscillation device (23) arranged to act on the support table (21) and having at least one effective axis of rotation (28) and movable members (24, 27, 30) arranged so as to produce said relative oscillatory movement between the piece to be sawed (20) and the layer of wires (15) about said axis of oscillation (A) whose spatial position can be adjusted and programmed such that this axis of oscillation (A) is located at a programmable and adjustable distance (Z) from said effective axis of rotation (28), the oscillation device (23) comprising first members (27) to carry out a rotation ($\alpha$) about said axis of rotation (28) perpendicular to the cutting plane (YZ), second members (30) to carry out a movement in a direction parallel to the cutting plane (YZ) and third members (24) to carry out a translatory movement in a direction coinciding with the cutting direction (Z), **characterized by** the fact that the first members comprise a rotatable element (27) mounted on the third members (24) and that the second members (30) have a sliding element (31, 32) disposed between the rotatable element (27) and the support table (21) on which the piece to be sawed (20) is fixed.

2. Sawing device according to claim 1, **characterized by** the fact that the movements of the first, second and third members (27, 30, 24) are connected by the following equations :

$$Z_{\alpha} = \left( \frac{Z_o(1 - \cos\alpha)}{\cos\alpha} \right)$$

$$Y_{\alpha} = Z_o \cdot tg\alpha$$

in wich $Z_o$ is equal to the distance separating the axis of rotation (28) of the rotatable element (27) from the axis of oscillation (A) that is obtained;
$\alpha$ is the angle of rotation of the rotatable element (27);
$Z_{\alpha}$ corresponds to the translatory movement of the third members (24); and
$Y_{\alpha}$ corresponds to the translatory movement of the second members (30).

3. Wire sawing device comprising at least one layer of wires (100) adapted to move with alternating or continuous movement, this layer of wires being pressed against a piece to be sawed (20) and supported by wire guide cylinders (101, 102), first means (116) being provided to carry out a relative advancing movement between the piece to be sawed (20) and the layer of wires (100) in a cutting direction (Z) contained in a cutting plane (YZ), seconds means (103) being provided to carry out a relative oscillatory movement between the piece to be sawed (20) and the layer of wires (100) about an axis of oscillation perpendicular to the cutting plane, the second means comprising an oscillation device (103) arranged to act on the mechanical members (104) supporting the wire guide cylinders (101, 102) and having at least one effective axis of rotation (110) and movable members (106, 107, 110) arranged so as to produce said relative oscillatory movement between the piece to be sawed (20) and the layer of wires (100) about an axis of oscillation (A) whose spatial position can be adjusted and programmed such that this axis of oscillation (A) is located at a programmable and adjustable distance (Z) from said effective axis of rotation (28), **characterized by** the fact that the oscillation device (103) comprises a pendulum (104) mounted pivotably about said axis of rotation (110) perpendicular to the cutting plane, the wire guide cylinders (101, 102) being mounted on at least one support (106, 107) that can be moved in a direction (Y) parallel to the cutting plane (YZ), translatory members (116, 117) being provided to produce a relative movement between the piece to be sawed (20) and said axis of rotation (110) in a direction coinciding with the cutting direction (Z).

**4.** Sawing device according to one of claims 1 to 3, **characterized by** the fact that it comprises a programmable control unit (35) adapted to control the movements of rotation and translation produced by the oscillation device such that the combination of these generated movements has as its resultant an oscillatory movement about an axis of oscillation (A) whose position is adapted to be programmed.

**5.** Sawing device according to claim 4, **characterized by** the fact that the control unit (35) is arranged so as to produce an oscillatory movement which can have variable amplitudes and frequencies within the course of time and/or as a function of the sawing depth.

EP 1 320 438 B1

Fig.1

Fig.2

10

Fig.3

Fig.4

Fig. 5

## Fig. 6

Fig. 7